# EUROPEAN PATENT APPLICATION

(11) **EP 1 445 151 A1**
(43) Date of publication of application: **11.08.2004**
(21) Application number: 04002531.4
(22) Date of filing: 05.02.2004
(51) Int. Cl.: B60R 3/02

(54) **An electromechanically controlled retractable step for a vehicle**

(30) Priority: 06.02.2003 IT TO20030080
(71) Applicant: FIAT AUTO S.p.A., 10135 Torino (IT)
(72) Inventor: Frisoni, Valter, 10135 Torino (IT); Pelassa, Alberto, 10093 Collegno (Torino) (IT); Chiesa, Franco, 10040 La Loggia (Torino) (IT)
(74) Representative: Quinterno, Giuseppe

(57) **Abstract**

In order to facilitate access to and descent from a vehicle, such as a motor vehicle, a retractable step (10) is provided which can be moved, by virtue of a driving mechanism with rotatable levers (15, 16, 23), controlled by an actuator device (14) such as an electric geared motor (25), between a retracted position, in which the step (10) is arranged in a substantially vertical position beneath a respective door (12) of the vehicle, with an outer surface (10a) thereof flush with that of the door, and an extended position in which the step (10) is rotated and translated outwardly of the vehicle, so as to provide a large tread surface projecting laterally from the vehicle.

## Description

The present invention relates to a retractable step intended to facilitate access on board of a vehicle as well as descent from the vehicle, of the type controlled electro-mechanically through a driving mechanism operated by an actuator device, such as an electric geared motor.

In order to facilitate access to and descent from vehicles the floor of which is high off the ground, such as people carriers or off-road vehicles, it is known the use of steps which can be moved from a rest position, generally hidden beneath the floor of the vehicle, and a working position in which the steps project outwardly from the side of the vehicle.

An example of a retractable step for a vehicle is provided in the European patent application EP-A-0 884 218. The retractable step according to this prior document is mounted on a corresponding longheron of the vehicle chassis for rotation about a longitudinal axis, between an extended working position in which the step extends laterally towards the outside of the vehicle, and a retracted rest position in which the step is housed inside the longheron with its external surface substantially flush with the vehicle body. Rotation of the step between the two rest and working positions is controlled by the opening and closing movement of the respective side door of the vehicle through a flexible cable transmission.

This prior art arrangement has the disadvantage, however, that it makes the use of the step somewhat awkward and uncomfortable, since the space available to tread on is very limited both longitudinally and transversely. As is apparent from Figure 8 of the aforesaid patent application, which shows the working position of the step, in order to gain sufficient tread on the step, a user climbing on the vehicle is obliged to insert his foot into the cavity formed inside the outer longheron, with the tip of his foot beyond the plane of the side door. Moreover, this involves a risk of interference with the upper portion of the outer longheron as the foot treading on the step is raised, which makes access on board of the vehicle even more problematic. In addition, it is extremely uncomfortable, if not impossible, to use a step of this type to get out of the vehicle, especially for people with limited mobility (for whom the step is primarily intended), owing to the limited outward projection of the support base of the step.

The object of the present invention is to solve the problems of the prior art described above, by providing a step which can facilitate both access on board of a vehicle as well as descent therefrom, which has a simple and inexpensive structure and a reliable operation, and which can be concealed within the profile of the vehicle, by becoming integrated into the chassis when in its rest position.

This object is fully achieved according to the present invention by virtue of a step having the characteristics defined in the characterising part of Claim 1. Further advantageous characteristics of the invention are specified in the dependent claims.

In summary, the invention is based on the idea of providing a step which can be moved, by means of a rotatable-lever driving mechanism controlled by an actuator device, such as an electric geared motor, between a retracted position, in which the step is arranged substantially vertically beneath the respective door of the vehicle, with its external surface flush with that of the door, and an extended position, in which the step is rotated and translated towards the outside of the vehicle, in such a way as to provide a large tread surface projecting laterally from the vehicle.

The characteristics and advantages of the present invention will become apparent from the detailed description which follows, provided purely by way of non-limitative example with reference to the appended drawings, in which:
Figure 1 is a perspective view of a retractable step for a vehicle according to the present invention, in its retracted or rest position;
Figure 2 is a perspective view of a retractable step for a vehicle according to the present invention, in its extended or working position;
Figure 3 is a side view of a retractable step for a vehicle according to the present invention, in its retracted or rest position;
Figure 4 is a side view of a retractable step for a vehicle according to the present invention, in an intermediate position between the rest and working positions;
Figure 5 is a side view of a retractable step for a vehicle according to the present invention in its extended or working position;
Figure 6 is a plan view from above showing in detail an electrical actuator device for controlling the driving mechanism of a retractable step for a vehicle according to the present invention; and
Figure 7 is a schematic view, sectioned along a transverse vertical plane, of a retractable step according to the present invention and of the portion of the vehicle which houses the step.

In the description and the claims that follow, terms such as "longitudinal" and "transverse", "inner" and "outer" and "upper" and "lower" should be understood as referring to the mounted condition on the vehicle.

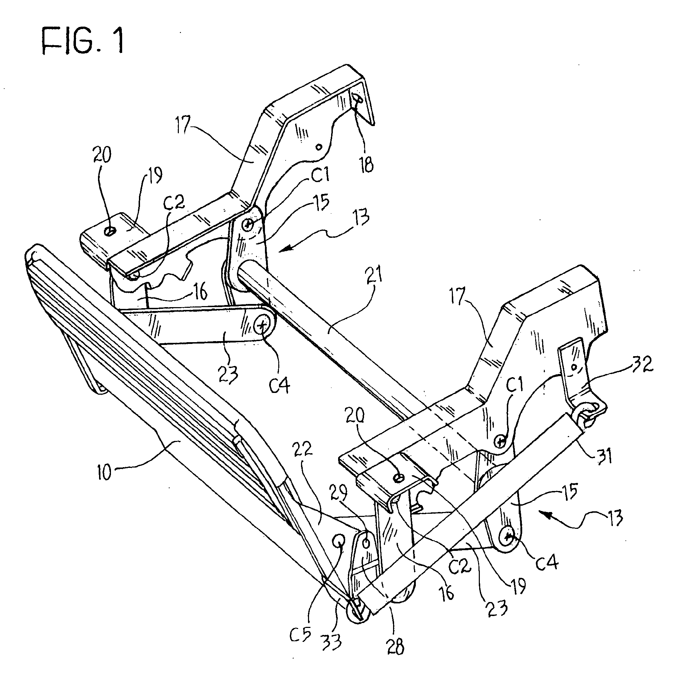

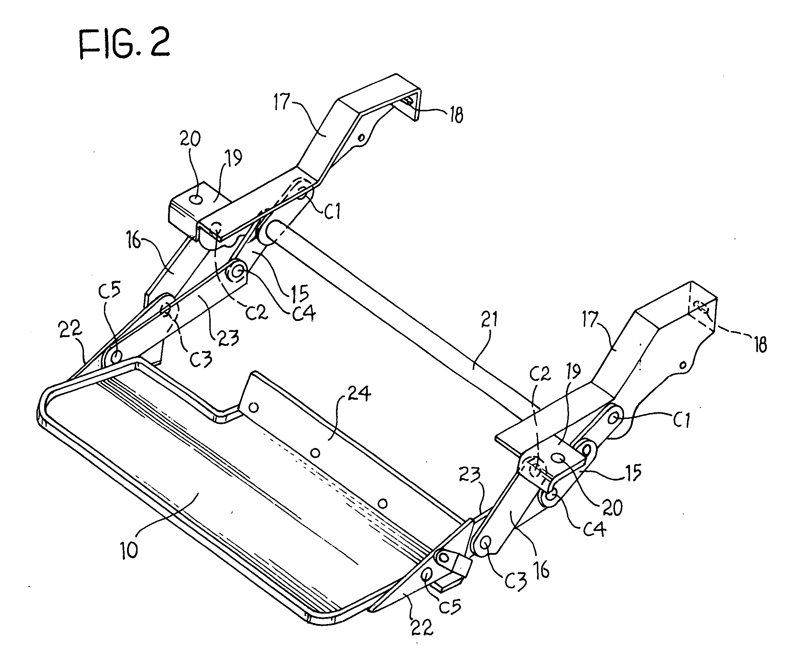

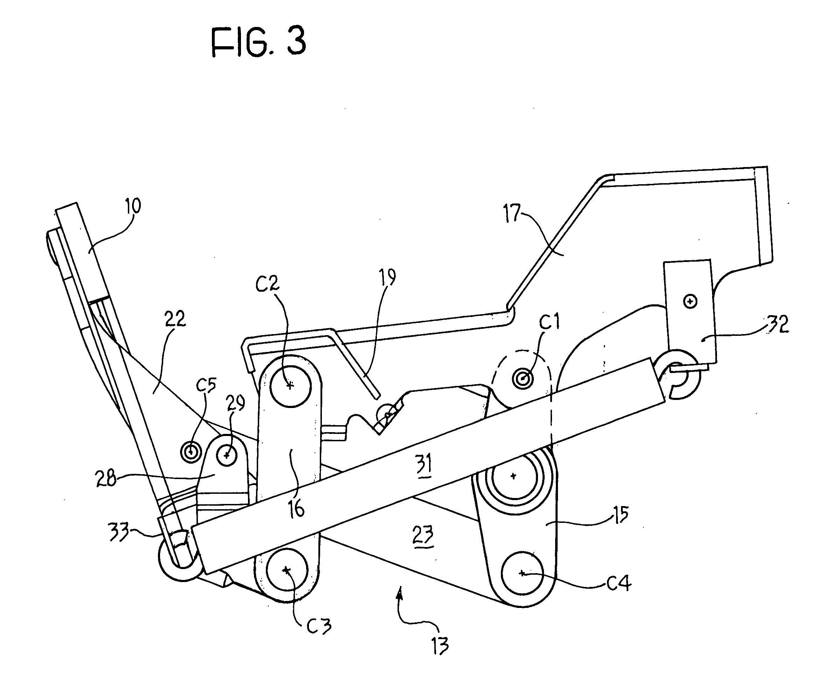

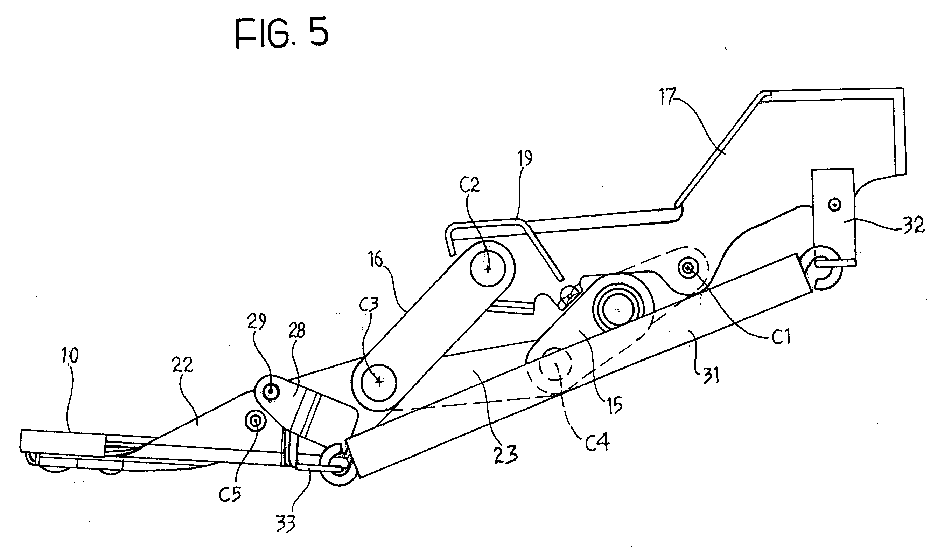

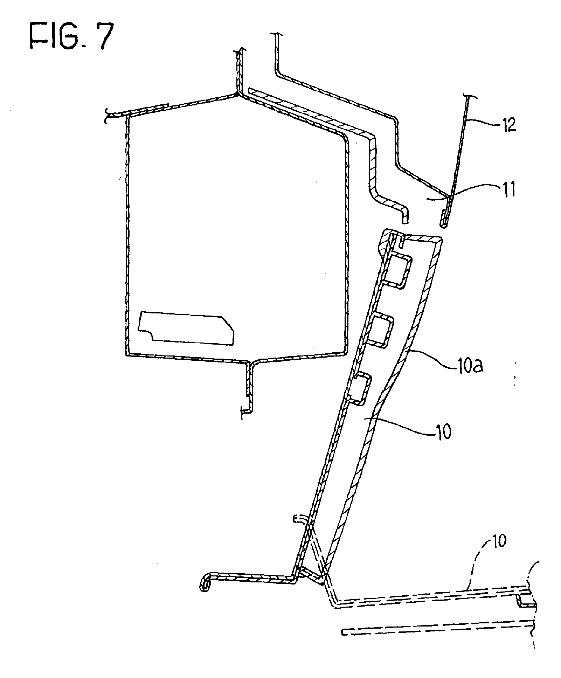

A retractable step according to the present invention, indicated 10 in the drawings, is intended for use in a vehicle, in particular in a motor vehicle, for facilitating both access on board of the vehicle and descent therefrom. The step 10 is arranged to be moved between a retracted or rest position (Figures 1 and 3), in which the step is arranged nearly vertically, and an extended or working position (Figures 2 and 5), in which the step is rotated and translated towards the outside of the vehicle. These two operating positions are both shown in the sectioned view of Figure 7, in which it can be seen that in the retracted position (shown in continuous line) the step is housed in a proper vane 11 beneath the respective side door 12 of the vehicle (of which only a lower portion is shown), with an outer wall portion 10a of the step arranged flush with the outer surface of the door 12. In the extended position (shown in short dashes line), the step 10 is in a substantially horizontal position and projects laterally from the outer surface of the door 12 so as to provide a large tread surface for the driver or passenger who has to get on or off the vehicle.

In order to move the step 10 between the aforesaid retracted and extended positions, there is provided according to the invention a driving mechanism, generally indicated 13, and formed basically by a pair of quadrilateral linkages (arranged at either side of the step) controllable simultaneously by an actuator device 14, preferably of electric type.

Each quadrilateral linkage includes a first, transversely inner rotatable lever 15 and a second, transversely outer rotatable lever 16, each pivoted at its upper end about a fixed centre of rotation indicated C1 and C2, respectively, to a metal support element 17 which is intended to be attached to the structure of the vehicle (not shown). Each element 17 has a hole 18, for example, at its rear end through which a bolt (not shown) can be inserted in order to fix the element to an inner longheron (also not shown) of the vehicle structure and is provided at its front with a bracket 19 having a hole 20 through which a bolt (not shown) can be inserted in order to fix the element to an outer longheron (also not shown) of the vehicle structure.

The two inner rotatable levers 15 of the two driving mechanisms are connected to each other, at a point spaced apart from their respective centres of rotation C1, C2, by a connecting link 21 operable to ensure that the two mechanisms move simultaneously, especially if, as in the embodiment described here, only one of the two mechanisms is operated directly by an actuator device (as will be shown in detail later).

The outer rotatable lever 16 of each driving mechanism is pivoted at its lower end, about a movable centre of rotation C3, to a respective side wall element 22 fixed to the respective side of the step 10 and extending perpendicular to the support plane thereof. As can be seen more clearly in Figure 5, the point C3 at which the rotatable lever 16 is pivoted to the side wall element 22 of the step 10 is positioned in an upper and transversely inner portion of the element 22.

The rotatable lever 15 of each driving mechanism, on the other hand, is pivoted at its lower end, about a movable centre of rotation C4, to the inner end of a respective connecting rod 23, the outer end of which is pivoted, about a displaceable centre of rotation C5, on a respective side wall element 22 of the step 10. As can be seen more clearly in Figure 5, the point C5 at which the connecting rod 23 is pivoted to the side wall element 22 of the step 10 is positioned in a central portion of the element 22 and thus in a position which is transversely outward of the point C3 at which the outer rotatable lever 16 is pivoted.

In order to reduce the space occupied by the driving mechanism of the step, the rotatable levers 15 and 16, as well as the connecting rod 23, are formed as plate elements, preferably of sheet metal.

As can be seen in the perspective view of Figure 2, the step 10 is also provided with a back wall element 24, serving to prevent a user's foot from slipping beyond the step and becoming trapped beneath the vehicle body during the phase of getting on the vehicle.

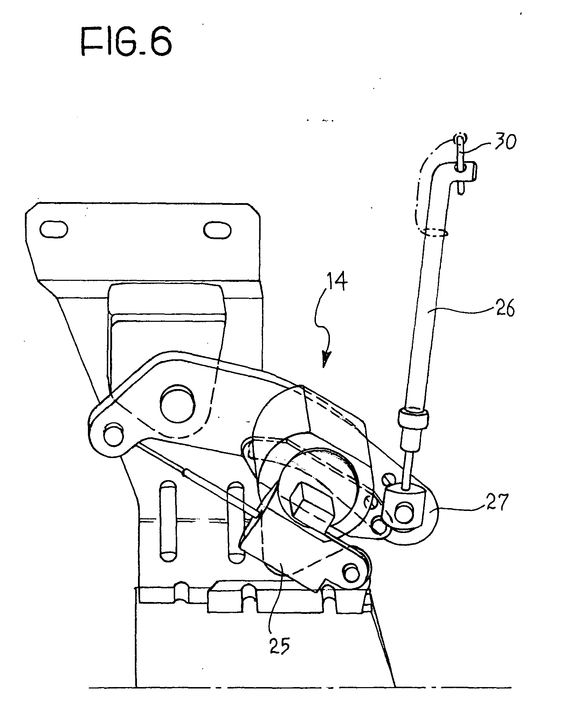

The two driving mechanisms described above are controlled, in order to move the step 10 between the aforesaid retracted and extended positions, by the actuator device 14 (Figure 6), such as an electric geared motor 25, through an operating pull-rod 26 pivoted at its ends to a transmission lever 27 of the actuator device 14 and to a bracket 28 fixed to one of the side wall elements 22 of the step 10.

The pivotal connection of the pull-rod 26 to the bracket 28 is preferably achieved by inserting an offset end portion 26a of the pull-rod into a hole 29 through the bracket 28 and securing the two elements by means of a split pin 30. A connection of this type offers the advantage of being easy to dismantle, this being particularly useful in the event of a fault with the actuator device, as will be better explained in the following part of the description.

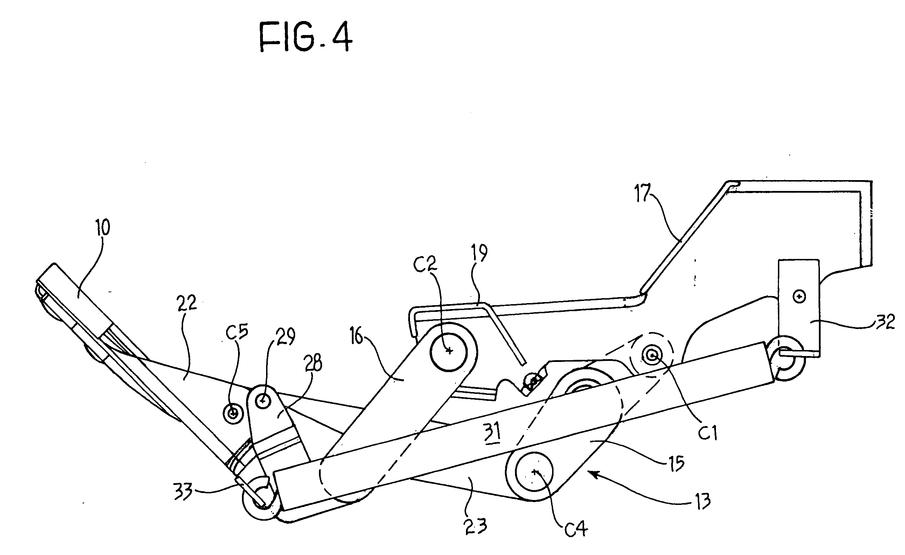

The operation of the driving device of the retractable step will now be described with reference to Figures 3 to 5 which show sequentially the movement of the step from the retracted position (Figure 3) to the extended position (Figure 5). In order to move the step from the retracted position to the extended position, the pull-rod 26 is pushed by the actuator device 14 and, by acting on the bracket 28, in turn urges the step 10 in a transversely outward direction. The particular arrangement of the pivotal points C3 and C5 of the step 10 to the outer rotatable lever 16 and the connecting rod 24, respectively, ensures that a rotation movement of the step takes place together with the outward translation movement, until the step is moved into the extended position shown in Figure 5. In order to move the step 10 back to its retracted position, on the other hand, the actuator device 14 pulls on the pull-rod 26. In this connection it is important to note that in order for the return movement of the step to be correctly executed, in the extended position (Figure 5) the centre of the hole 29, where the connecting rod 26 is pivoted on the bracket 28, is above a line connecting the pivotal centres C3 and C5 associated with the step. In this way, when the pull-rod 26 is pulled by the actuator device 14, the step 10 is subject to a clockwise torque about the centres of rotation C3 and C5 which tends to rotate the step into the substantially vertical position of Figure 3.

The command to extend the step, that is the electrical control signal controlling the activation of the actuator device 14, can be given, in a per-se-known manner, either by the driver of the vehicle or by the passenger who has to get on or off the vehicle or automatically. The execution of this command can possibly be subject to the fulfilment of further particular conditions, such as the vehicle being stationary, for example, and/or the parking brake being operated.

In order to allow the step to return to the retracted position from the extended position in the event of a fault with the actuator device, a spring 31 is provided according to the invention, which is connected at its transversely inner end to a bracket 32 fixed to the support element 17 of the driving mechanism of the step and at its transversely outer end to another bracket 33 fixed to the step, on the same side, for example, as the bracket 28 for attachment of the pull-rod 26. When the step is in the extended position, the spring 31 is under tension and therefore tends to move the step back to the retracted position. In this way, in the event of a fault with the actuator device, in order to move the step into its housing 11 beneath the door 12, one need only disconnect the pull-rod 26 from the bracket 28 (by releasing the split pin 30) and guide the step in its movement to the retracted position under the biasing action of the spring 31.

Naturally, the principle of the invention remaining unchanged, embodiments and manufacturing details may vary widely from those described and illustrated purely by way of non-limitative example.

## Claims

1. A retractable step (10) for a vehicle, intended to provide a tread surface for a driver or passenger to get on or off the vehicle, the step having an associated driving mechanism (13) for moving the step between a retracted position, in which the step is arranged in a substantially vertical position beneath a respective door (12) of the vehicle, and an extended position, in which the step projects outwardly of the vehicle; **characterised in that** the said driving mechanism includes a pair of articulated linkages (15, 16, 23) arranged so as to cause the step to rotate and translate during the movement between the aforesaid retracted and extended positions, and an actuator device (14) arranged to control the said pair of linkages.

2. A retractable step according to Claim 1, **characterised in that** the driving mechanism (13) is arranged to dispose the step, in the retracted position, with an outer surface (10a) thereof flush with the outer surface of the respective door (12).

3. A retractable step according to Claim 1, **characterised in that** each of the said articulated linkages includes first and second rotatable levers (15, 16) pivoted at a first upper end thereof about respective fixed pivot points (C1, C2) relative to the structure of the vehicle and a connecting rod (23) pivoted to the other end of the first rotatable lever (15) about a movable pivot point (C4) and to the step (10) about a movable pivot point (C5), the other end of the second rotatable lever (16) being pivoted to the step (10) about a movable pivot point (C4).

4. A retractable step according to Claim 1, **characterised in that** the said actuator device (14) for controlling the pair of articulated linkages includes an electric geared motor (25) connected to the step (10).

5. A retractable step according to Claim 4, **characterised in that** the electric geared motor (25) is connected to the step (10) through an operating pull-rod (26).

6. A retractable step (10) according to Claims 4 or 5, **characterised in that** the actuator device (14) is releasably connected to the step (10) and **in that** the driving mechanism (13) also includes resilient means (31) for exerting a force tending to move the step (10) back to the retracted position.

7. A retractable step according to Claim 1, **characterised in that** it also includes control means arranged, when the associated door (12) is opened or closed, to generate automatically corresponding signals for activating the actuator device (14) so as to control the movement of the step (10) into the extended or the retracted position respectively.

8. A vehicle, in particular a motor vehicle, having at least one retractable step (10) according to any of the preceding claims.
